# EUROPEAN PATENT APPLICATION

(11) **EP 1 607 905 A1**
(43) Date of publication of application: **21.12.2005**
(21) Application number: 05011304.2
(22) Date of filing: 25.05.2005
(51) Int. Cl.: G06K 19/07

(54) **Chipcard with contact interface and non-contact interface**

(30) Priority: 17.06.2004 JP 2004179591
(71) Applicant: SEIKO EPSON CORPORATION, Shinjuku-ku, Tokyo 163-0811 (JP)
(72) Inventor: Yokoyama, Kazuyuki c/o SEIKO EPSON CORPORATION, Suwa-shi, Nagano-ken 392-8502 (JP); Goto, Akihiro c/o SEIKO EPSON CORPORATION, Suwa-shi, Nagano-ken 392-8502 (JP)
(74) Representative: Hoffmann, Eckart

(57) **Abstract**

The IC tag module enables data communication through a wireless port (11) and with an electronic device in which the IC tag module is incorporated. The IC tag module (10) has a wireless port (11), a wired port (17) composed of a wired communication port (13) and a wired power supply port (12), a power supply circuit unit (110) for combining power supplied from both ports (11) and (12) and supplying the combined power supply to the IC tag module, a data storage circuit unit (130) for storing data received through the communication ports (11) and (13), and a control circuit unit (120) for controlling module operation. The power supply circuit unit (110) detects whether power is supplied first from the wireless port (11) or the wired power supply port (12). If power is supplied from both ports (11) and (12), the control circuit unit (120) enables communication with the data storage circuit unit (130) through the port from which power was supplied first, and disables communication through the other port.

## Description

The present invention relates to an IC tag module, an electronic device, an information communication system, and a communication control method for an IC tag module capable of data communication through a wireless port and a wired port.

IC tag modules, such as RFID tag modules, enabling contactlessly reading and writing information using radio frequency identification (RFID) wireless communication are widely used today. See, for example, JP 2003-224677 A.

Such IC tag modules generally send and receive data and obtain operating power only through a wireless port. Using a wireless port for data communication and for the power supply works sufficiently when the IC tag module is used independently. When the IC tag module is incorporated in an electronic device such as an information device or home appliance, however, the independently working IC tag module cannot interact with the control circuit of the electronic device.

US 2004/0110533 A1 discloses an IC card that communicates via a wireless interface with a card reading and writing apparatus and via a wired interface with a portable terminal. The IC card is capable of transmitting data received from the card reading and writing apparatus to the portable terminal and vice versa. Therefore, non-contact data communication can be performed between the mobile terminal connected to the IC card and the card reading and writing apparatus. The wireless interface is based on two coils, one on the side of the card reading and writing apparatus and the other one on the side of the IC card. To establish the interface the two coils must be positioned close together so that a magnetic field generated in one coil causes magnetic induction in the other coil. To transmit data via this interface the IC card modulates the load acting via the magnetic coupling on the card reading and writing apparatus.

The present invention aims at providing an IC tag module, an electronic device, an information communication system, and a communication control method for an IC tag module capable of both data communication with an electronic device into which the IC tag module is incorporated and data communication through a wireless port.

This object is achieved by an IC tag module as claimed in claim 1, an electronic device as claimed in claim 6, an information communication system as claimed in claim 7 and a method as claimed in claim 10.

By thus having a wired port in addition to a wireless port, the wired port can be used for data communication with an electronic device. Furthermore, by connecting the wired port to the control circuit and power supply circuit of the electronic device, the IC tag module can be used installed inside the electronic device. Yet further, by enabling and disabling communication with the data storage circuit unit based on when power supply starts through each port, data can be read and written through both ports to the same data storage circuit unit.

If operating power is supplied from either the wireless port or wired port, communication is preferably enabled through the port through which the operating power is supplied. More specifically, if operating power is supplied from the other port when the operating power supply from the port from which power was supplied first is interrupted, communication is preferably immediately enabled through said other port. Furthermore, instead of incorporating and using the IC tag module inside the electronic device, the IC tag module can be connected through its wired port to an external data communication port disposed to the electronic device to enable data communication with the electronic device.

In this situation the control circuit unit preferably returns a communication disabled status message to the device that asserted the communication request when a communication request is asserted through whichever of the wired port and wireless port is disabled.

When a communication request is asserted, this arrangement enables the control circuit unit to inform the communication device (any terminal capable of communicating data through the wireless port or the wired port) for which communication is disabled that communication is currently not possible.

Further preferably, when a communication request is received through the disabled communication port (either the wired port or the wireless port), the control circuit unit detects if the communication-enabled port is currently being used for data communication, returns a communication disabled status message if the enabled port is in use, and switches the enabled/disabled status of both ports if the enabled port is not in use.

Instead of simply reporting that communication is disabled when a communication request is received from a communication device for which communication is disabled, this arrangement switches the enabled/disabled status of both ports based on whether the communication-enabled port is currently busy, and can thus enable communication with a communication device for which communication is currently turned off. The enabled/disabled status of both ports can thus be switched without needing to first interrupt the power supply from the communication-enabled port.

Yet further preferably, the control circuit unit switches the enabled/disabled status of both ports when a command for switching communication to the other port is received from whichever of the wireless port and wired port is enabled.

This arrangement enables easily switching the enabled/disabled status of both ports when a command for switching communication to the other port is received from the enabled communication port without needing to first interrupt the power supply from the communication-enabled port.

Yet further preferably, the power supply circuit unit regularly detects if operating power is being supplied from the wireless port and the wired port; and when a command for switching communication to the other port is received from whichever of the wireless port and wired port is enabled, the control circuit unit first confirms that operating power is being supplied from said other port before switching the enabled/disabled status of both ports.

Data communication control can thus be reliably passed to the other communication port when a command for switching communication to the other port is received from a communication-enabled device after first confirming that operating power is being supplied from said other port before switching communication control.

An electronic device according to another aspect of the present invention has an IC tag module as described above; a device control circuit for sending and receiving data through the wired communication port; and a device power supply circuit for supplying operating power to the wired power supply port.

By thus having an internal IC tag module, the electronic device can exchange data with the data storage circuit unit of the IC tag module, and can operate in conjunction with a device connected thereto through the wireless port of the IC tag module.

An information communication system according to the present invention has an IC tag module as described above; an electronic device for sending and receiving data and supplying operating power through the wired port of the IC tag module; and a wireless communication terminal for sending and receiving data and supplying operating power through the wireless port of the IC tag module; wherein the IC tag module stores parameter settings of the electronic device in the data storage circuit unit, the wireless communication terminal reads and writes the parameter settings in the data storage circuit unit through the wireless port, and the electronic device reads the parameter settings written in the data storage circuit unit through the wired port, customizes the electronic device based on said parameter settings, and/or changes the parameter settings.

By storing parameter settings of the electronic device in the data storage circuit unit of the IC tag module, the electronic device can be customized as desired by the customer prior to shipping without opening the product packaging or connecting a power supply. The parameter settings of the electronic device can also be changed while the electronic device is operating without changing the interface connection.

The electronic device preferably the electronic device writes device information containing electronic device maintenance information and/or error log information through the wired port to the data storage circuit unit; and the wireless communication terminal reads and writes the device information in the data storage circuit unit through the wireless port.

Furthermore, by storing maintenance information and/or an error log for the electronic device in the data storage circuit unit of the IC tag module, data can be easily read from the wireless communication terminal even when the electronic device is a stand-alone device (such as a device without an external communication port and unable to receive data from a higher level host terminal, or a device without a human interface for reading and writing internal data) and this information can thus be used effectively when a malfunction occurs, for example. Because the maintenance information can also be read from the wireless communication terminal when the electronic device is installed (regardless of whether the electronic device is operating or not and regardless of the on/off status of the power supply), the maintenance information can also be used for preventive maintenance. When parts are replaced in the electronic device, the wireless communication terminal can also write repair data to the data storage circuit unit and this repair data can then be read and used for subsequent repair and maintenance.

This maintenance information includes information about how many times parts with a certain life cycle have been used, the consumption or remaining amount of consumable goods, the operating time of the device, and a parts replacement history, for example.

The error log stores information about errors that occurred in the electronic device with which the IC tag module is used. The error log also contains error data such as information that is recorded when the electronic device is used improperly or illegally, and errors that occur when the program does not run normally.

The data storage circuit unit preferably stores ID information identifying the electronic device.

The type of data read from the electronic device by the wireless communication terminal is not necessarily known to the wireless communication terminal and therefore cannot be interpreted without acquiring data format information. By storing ID information identifying the electronic device in the data storage circuit unit, however, the required formatting information can be acquired from a website maintained by the device manufacturer, for example, based on this ID information.

A communication control method for an IC tag module according to another aspect of the invention is a communication control method for an IC tag module that is capable of data communication through a wireless port and a wired port, the communication control method having a step of switching the enabled/disabled status of each port according to a communication request asserted through the wireless port or wired port.

This arrangement enables data communication with the electronic device through the wired port, and enables using the IC tag module assembled inside the electronic device by connecting the wired port to the control circuit and power supply circuit in the electronic device.

Furthermore, because communication is enabled and disabled according to the presence of communication requests from the ports, data can be smoothly communicated with a device connected though both ports. If a communication request is received through both the wireless port and the wired port, communication is preferably enabled for the port through which the first communication request is received.

Operating power is preferably supplied to the IC tag module through the wireless port and wired port, and the enabled/disabled status of each port is preferably switched according to presence or absence of a communication request and presence or absence of operating power.

Communication can thus be reliably switched between the communication ports because communication is enabled or disabled based on both whether a communication request is received and whether operating power is received from the communication ports.

Note that switching the enabled/disabled status of each port according to the presence of operating power means that communication is enabled only through the port from which operating power is supplied. Therefore, if a communication request is received from a port but operating power is not also supplied from that port, communication is not enabled through that port. In addition, if the power supply from the port through which the communication request was received is interrupted after the communication request is received, communication is switched to the other port.

Other objects and attainments together with a fuller understanding of the invention will become apparent and appreciated by referring to the following description of preferred embodiments taken in conjunction with the accompanying drawings, in which:
- Fig. 1: is a block diagram of an information communication system according to a preferred embodiment of the present invention;
- Fig. 2: shows various module arrangements and methods of mounting an RFID tag module according to the present invention;
- Fig. 3: is a function block diagram of an RFID tag module according to the present invention;
- Fig. 4: shows a sample memory map used with an RFID tag module according to the present invention;
- Fig. 5: shows an example of the status area portion of the memory map; and
- Fig. 6: shows some methods of incorporating an RFID tag module into an electronic device.

The present invention relates to an IC tag module that, in addition to having a wireless port, also has a wired port for wire-bound data communication with an electronic device and for being supplied with operating power from the electronic device. More particularly, an IC tag module according to the present invention enables and disables communication with an internal data storage circuit unit based, for example, on the timing at which power supply through the wired and/or the wireless ports starts, and thus enables reading from and writing data to the same data storage circuit unit through both ports.

An IC tag module and an electronic device incorporating an IC tag module according to the present invention are described below using an RFID tag module enabling wireless communication by means of radio frequency identification as an example of an IC tag module according to the present invention. An information communication system and a communication control method according to the present invention that write and use settings for the electronic device, maintenance information, and an error log in the data storage circuit unit of the RFID tag module are also described below.

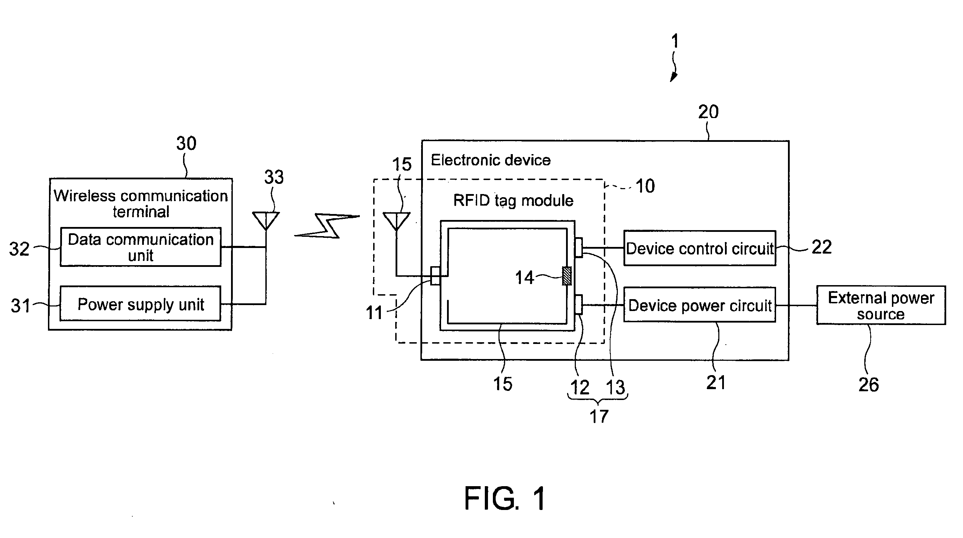

An information communication system 1 according to the present invention is described first below with reference to Fig. 1. As shown in the figure, this information communication system 1 has an RFID tag module 10 (also referred to simply as "module" hereinafter), an electronic device 20 incorporating the module 10, and a wireless communication terminal 30 (an RFID reader/writer) for wirelessly reading information from and writing information to the module 10 as well as supplying power thereto.

The module 10 is a passive tag without battery, and has a wireless port 11 for sending data to and receiving data and operating power from the wireless communication terminal 30 over a wireless connection. In accordance with the present invention, the module 10 has also a wired power supply port 12 for being supplied with operating power over a wired circuit from the electronic device 20, a wired communication port 13 for sending data to and receiving data from the electronic device 20 over a wired connection, a semiconductor chip 14 composed of memory circuits and control circuits, and a module antenna 15 for wirelessly communicating with the wireless communication terminal 30. Note that the wired power supply port 12 and the wired communication port 13 are collectively referred to below as a wired port 17.

This module 10 is contained inside the electronic device 20. The electronic device 20 has a device power supply circuit 21 and a device control circuit 22. The device power supply circuit 21 is connected to an external power source 26, and supplies power obtained from the external power source 26 to the module 10. The device control circuit 22 is connected to the wired communication port 13, and controls the internal operation of the electronic device 20.

The wireless communication terminal 30 has a power supply unit 31 for supplying power to the module 10 through the wireless port 11, a data communication unit 32 for sending data to and receiving data from the module 10 likewise through the wireless port 11, and a terminal antenna 33 for sending radio waves (RF energy) to the module antenna 15 of the module 10 and wirelessly communicating with the module antenna 15.

In the information communication system 1 thus comprised, the module 10 exchanges data with the device control circuit 22 of the electronic device 20 using the wired communication port 13, and receives operating power from the device power supply circuit 21 of the electronic device 20 through the wired power supply port 12. Communication between the wireless port 11 and the wired port 17 (13) can be turned on and off based on the timing of the power supply, communication requests, and/or communication switching commands from these ports 11, 12, 13. Switching the communication state is further described below.

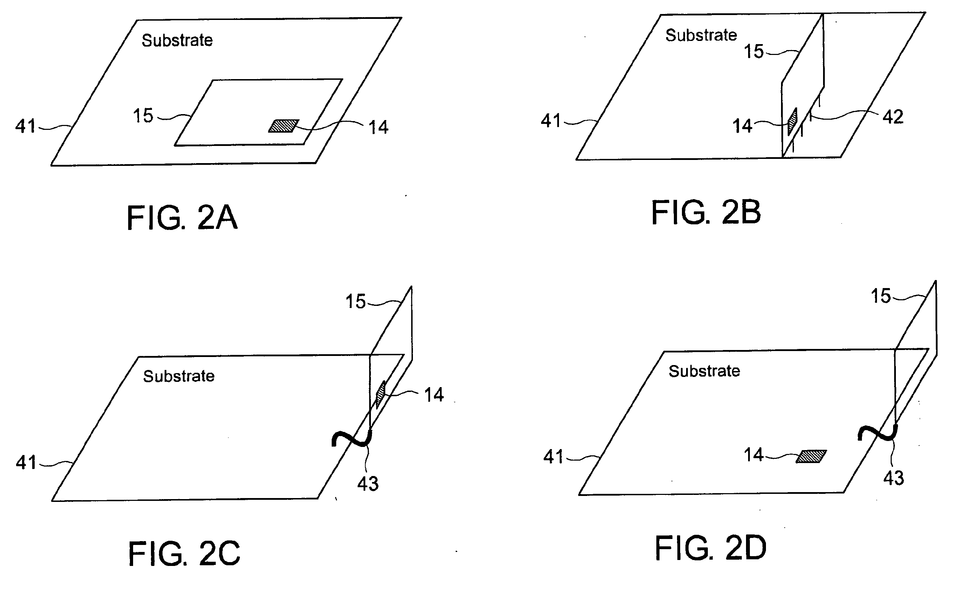

The form of the module 10 and how the module can be disposed for use with an electronic device 20 is described next with reference to Fig. 2. Fig. 2A shows an arrangement in which a module antenna 15 is patterned on a substrate 41 for installing an RFID tag module in an electronic device, and a single semiconductor chip 14 is mounted on the substrate 41 as the module. This arrangement assumes that sufficient space is available on the substrate 41 and the positioning and arrangement of the electronic device 20 are not affected by RF interference, but provides the advantage of enabling incorporating an RFID tag module into an electronic device very inexpensively.

Fig. 2B shows an arrangement in which the semiconductor chip 14 and module antenna 15 are a single unified component mounted by soldering electrode portions 42 to the substrate 41. This configuration enables easily installing the module in an electronic device when only limited space is available on the substrate 41 or when RF interference results if the module is installed parallel to the substrate 41 (and RF interference is not a problem when the module antenna 15 is disposed perpendicularly to the substrate 41).

Fig. 2C shows an arrangement in which the semiconductor chip 14 and module antenna 15 are a single unified component affixed to the inside of the case of an electronic device and connected to the substrate 41 by way of a connector 43. Using a connector 43 affords greater freedom in deciding where to locate the module antenna 15 so that the module antenna 15 can be located where RF interference is not a problem when RF interference is a problem in the area around the substrate 41.

Fig. 2D shows an arrangement in which only the semiconductor chip 14 is mounted as a module on the substrate 41, whereas the module antenna 15 is affixed to the inside of the case of the electronic device, for example, and is connected to the substrate 41 by a connector 43. When RF interference is a problem around the substrate 41 and there is not enough space to locate the module antenna 15 where there is no danger of RF interference, this arrangement can be used by changing only the shape (configuration) of the module antenna 15. Furthermore, because the module antenna 15 can be freely located where desired, this arrangement also enables locating the module antenna 15 where there is no RF interference.

Each of the arrangements of Figs. 2B, 2C and 2D enables standardizing the module, and thus inexpensively incorporating the module into an electronic device electronic device.

By thus adjusting the configuration of the module 10 and how the module is mounted or connected to the substrate 41 according to the configuration of the electronic device 20, RF interference can be minimized and the module can be inexpensively and easily disposed in the electronic device 20.

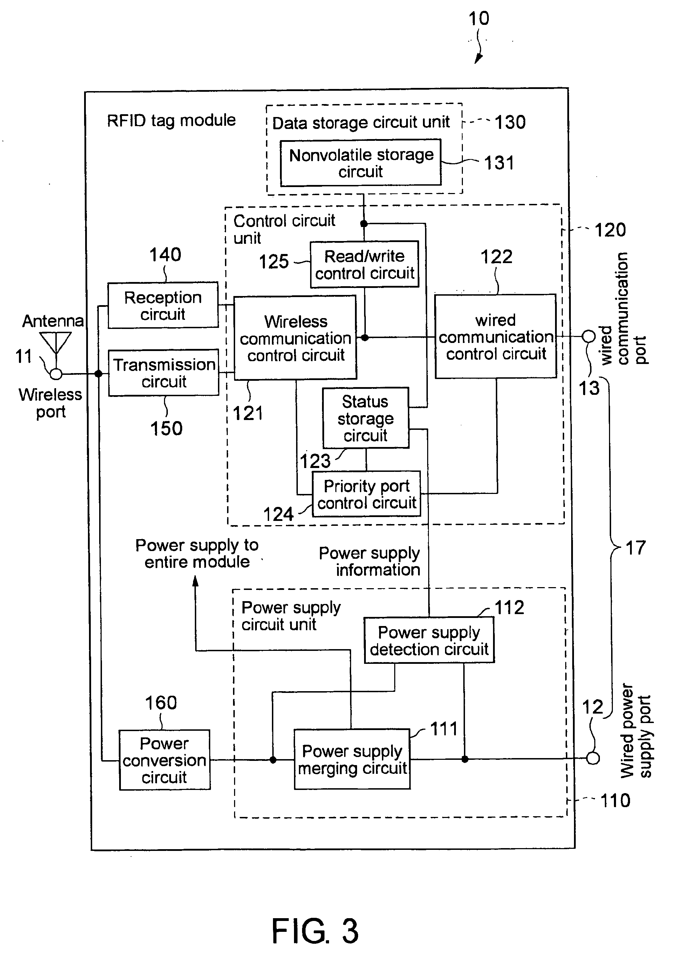

The control arrangement of the module 10 is described next with reference to Fig. 3. The interface of this module 10 has the wireless port 11 and the wired port 17. The module 10 also has a power supply circuit unit 110 for combining power supplied through the wireless port 11 and power supplied through the wired power supply port 12 and for supplying the combined power to the rest of the module 10; a control circuit unit 120 for controlling the operation of the module 10; a data storage circuit unit 130 for storing data received through the wireless port 11 and data received through the wired communication port 13; a reception circuit 140 for receiving and passing to the control circuit unit 120 data from the wireless communication terminal 30 received through the wireless port 11; a transmission circuit 150 for sending data acquired from the control circuit unit 120 through the wireless port 11 to the wireless communication terminal 30; and a power conversion circuit 160 for converting radio wave power received from the wireless communication terminal 30 through the wireless port 11 as operating power to the power supply circuit unit 110. The data storage circuit unit 130 has a nonvolatile storage circuit 131 for storing information in a non nonvolatile manner.

The power supply circuit unit 110 has a power supply merging circuit 111 for combining power supplied from the power supply ports 11 and 12, and a power supply detection circuit 112 for detecting if power is supplied from the port 11 and/or the port 12 and the timing at which power starts to be supplied from the respective port. The power supply merging circuit 111 supplies power to the module 10 as long as power is supplied from any one or both of the wireless port 11 and the wired power supply port 12, i.e., it does not require power being supplied from both ports 11 and 12 at the same time.

The power supply detection circuit 112 starts operating when the power supply circuit unit 110 starts supplying power to the module, detects if power is being supplied from the wireless port 11 and/or the wired power supply port 12, and sends a power supply status report indicating the power supply status of these ports to the control circuit unit 120 (status storage circuit 123). The power supply detection circuit 112 also detects the timing at which power supply from the ports 11 and 12 started (detects whether power was supplied first through the wireless port 11 or the wired power supply port 12), and supplies the detection result as priority port information to the control circuit unit 120. Note that the power supply status report and priority port information are together referred to below as the power supply information.

The control circuit unit 120 determines whether to enable or disable the communication ports 11 and 13 based on the power supply information acquired from the power supply detection circuit 112 as described in further detail below.

The control circuit unit 120 has a wireless communication control circuit 121 for controlling the exchange of data with the wireless communication terminal 30 through the wireless port 11, a reception circuit 140, and a transmission circuit 150; a wired communication control circuit 122 for controlling data communication with the electronic device 20 (specifically the device control circuit 22 as shown in Fig. 1) through the wired port 17; a status storage circuit 123 for storing the power supply information acquired from the power supply detection circuit 112 and the communication status of the wireless communication control circuit 121 and wired communication control circuit 122; a priority port control circuit 124 for turning the wireless communication control circuit 121 and the wired communication control circuit 122 on or off based on the priority port information stored in the status storage circuit 123; and a read/write control circuit 125 for reading data from the data storage circuit unit 130 or writing data acquired through one of the communication control circuits 121 and 122 from the respective communication device (that is, the wireless communication terminal 30 or the electronic device 20) to the data storage circuit unit 130.

When one of the communication control circuits 121 and 122 is enabled by the priority port control circuit 124, the enabled control circuit 121 or 122 can communicate through the communication port 11 or 13 with the read/write control circuit 125, whereas the disabled other communication control circuit is disconnected from the read/write control circuit 125 (that is, cannot communicate with the read/write control circuit 125). If a communication request is received through the disabled communication port 11 or 13 (the port connected to the disabled communication control circuit), the communication request is output to the priority port control circuit 124, the status storage circuit 123 is referenced, and if the other communication control circuit is communicating, a status report indicating that communication is disabled is returned to the requesting device (electronic device 20 or wireless communication terminal 30). If the other communication control circuit is not busy (not communicating, communication has ended), the priority port control circuit 124 switches communication control by disabling said one and enabling said other communication control circuit.

The status storage circuit 123 stores the power supply information (the power supply status information and priority port information) generated when either the wireless port 11 or the wired power supply port 12 starts supplying power. Note that the priority port information is stored only once when the power supply starts while the power supply status information is updated regularly and thus stores the latest information. If the power supply from the disabled port starts while the power supply from the enabled port (the port connected to the enabled communication control circuit) 11 or 12 is interrupted, the priority port information is rewritten (updated) when the power supply is interrupted.

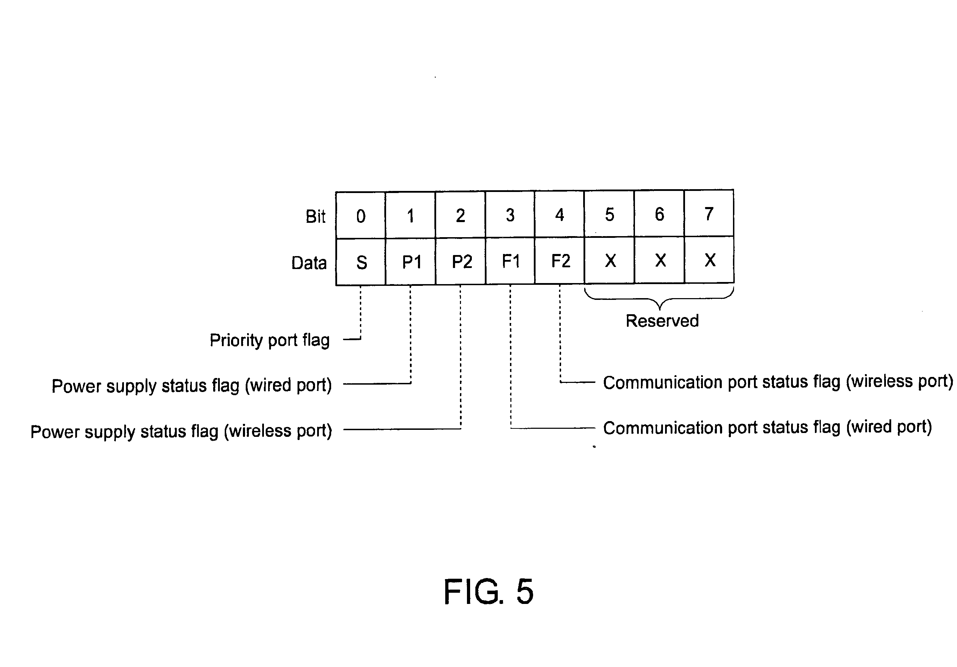

The status storage circuit 123 stores communication status information indicating whether the communication port 11 or 13 (communication control circuit 121 or 122) is being used for communication. This communication status information is set to indicate that data communication is in progress when data communication through either communication port 11 or 13 starts, and is reset to indicate that communication has ended when that communication ends. The power supply status information, priority port information, and communication status information are stored as flags in the status storage circuit 123 as described more fully below with reference to Fig. 5.

The priority port control circuit 124 enables the wireless communication control circuit 121 when the wireless port 11 has priority based on the priority port information stored in the status storage circuit 123, and enables the wired communication control circuit 122 when the wired port 17 has priority.

When a communication switching command is received from the communicating device 20 or 30 through whichever of the communication control circuits 121 and 122 is enabled, and the read/write control circuit 125 confirms from reading the power supply status information in the status storage circuit 123 that power is being supplied from the disabled port 11 or 12, the on/off state of both ports is switched (the priority port information is rewritten in the status storage circuit 123).

Furthermore, when a communication request is received from the communicating device 20 or 30 through the disabled one of the communication control circuits 121 and 122), the on/off status of both ports is switched as described above after confirming the communication status of the other communication control circuit.

The read/write control circuit 125 writes data acquired from the enabled one of the communication control circuits 121 and 122 to the data storage circuit unit 130 (specifically to the nonvolatile storage circuit 131), and passes data read from the data storage circuit unit 130 to whichever of the communication control circuits 121 and 122 is enabled. Furthermore, when a communication switching command is asserted through the enabled communication control circuit, the read/write control circuit 125 reads the power supply status information from the status storage circuit 123, and rewrites the priority port information if power is being supplied from the port 11 or 12 associated with the respective other one of the communication control circuits 121 and 122 (if communication is enabled). The priority port control circuit 124 then switches communication control based on the priority port information rewritten in the status storage circuit 123.

The nonvolatile storage circuit 131 has specific areas allocated for storing parameter settings for the electronic device 20, maintenance information, and an error log.

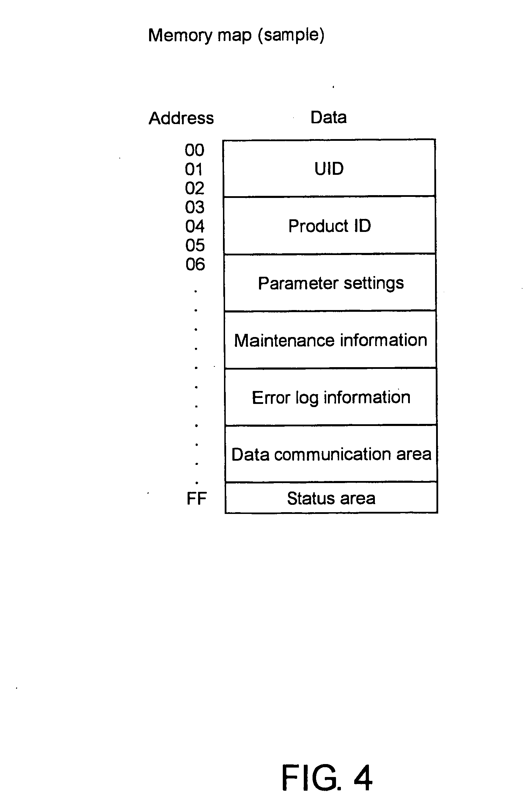

The memory map of the module 10 is described next with reference to Fig. 4. The nonvolatile storage circuit 131 is divided into discrete storage areas allocated to memory addresses 00 to FF according to a memory map such as shown in Fig. 4. In the example shown in Fig. 4 a universal identifier (UID) for identifying the module 10 (semiconductor chip 14) is stored at addresses 00 to 02, and a product ID (ID information) identifying the electronic device 20 in which the module 10 is installed is stored at addresses 03 to 05. The parameter settings, maintenance information, error log, and data communication area used to implement the present invention are stored in memory areas allocated to addresses 06 and higher. A status area used by the status storage circuit 123 for reading and writing data with is at memory address FF. This information can be read and written using specific commands common to the electronic device 20, wireless communication terminal 30, and module 10.

Note that the maintenance information and the error log denote device information for the electronic device 20, and are primarily written by the device control circuit 22 (see Fig. 1) through the wired communication port 13 and read by the wireless communication terminal 30 through the wireless port 11.

The UID is an identifier unique to a particular semiconductor chip 14 and commonly used in RFID systems to identify the semiconductor chip 14. The UID is also used for anticollision control so that when multiple RFID tag modules 10 are simultaneously present in the communication range of the wireless communication terminal 30, the wireless communication terminal 30 can communicate with a particular module 10 without interference from the other RFID tag modules 10. This UID is normally written to the semiconductor chip 14 during chip manufacture, and cannot be changed.

The product ID is an ID for identifying the type of electronic device 20 in which the module 10 is installed or to which it is connected, and can be written from the device control circuit 22 through the wired communication port 13. More specifically, the product ID is composed of information relating to the manufacturer of the electronic device 20, information for determining the type of device, and a serial number, for example, and is an ID that is unique to the electronic device 20 (product). The product ID is normally written to the electronic device 20 during the manufacturing process and cannot be changed. Note that the product ID could be written from the wireless communication terminal 30 instead of from the device control circuit 22. By thus storing a product ID in the nonvolatile storage circuit 131 of the module 10 and enabling the wireless communication terminal 30 to read the product ID, a single wireless communication terminal 30 can interact with plural types of electronic devices 20.

More specifically, the wireless communication terminal 30 may read a wide range of information from the electronic device 20 and cannot determine the type of information received until corresponding format data is received. The wireless communication terminal 30 in this embodiment of the invention therefore accesses, for example, a website maintained by the manufacturer of the electronic device 20 based on the read product ID to acquire the necessary format data and thus communicate with the electronic device 20. The Electronic Product Code (EPC) network (a system that combines RFID and network technologies to automatically identify products or packages to which the module 10 is affixed for information sharing in supply chain management (SCM) operations) operated by EPC Global is preferably used to acquire this format data.

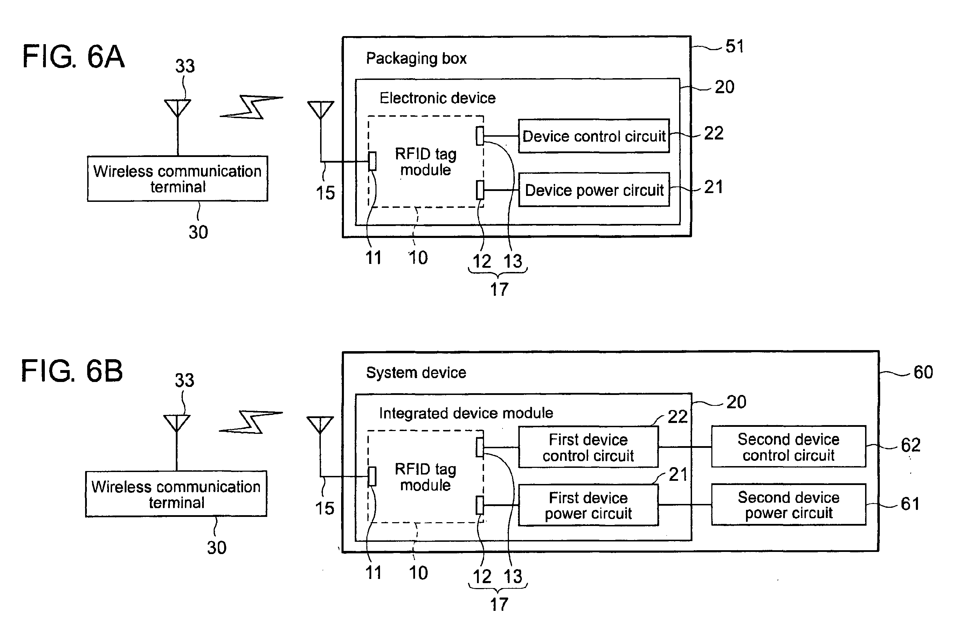

The parameter settings store the settings of parameters used to control the operation of the electronic device 20 with which the module 10 is used, and can be written from the wireless communication terminal 30 through the wireless port 11. The device control circuit 22 reads the parameter settings from the nonvolatile storage circuit 131 through the wired communication port 13 as needed, and reflects these parameters in the initial settings and default settings, for example, of the electronic device 20. By thus storing parameter settings in the nonvolatile storage circuit 131 of the module 10, the electronic device 20 can be customized as wanted by a customer when the electronic device 20 is contained in a packaging box 51 as shown in Fig. 6 (a), for example, without opening the packaging box 51 and without connecting a power supply. The parameter settings of the electronic device 20 can also be changed even when the electronic device 20 is operating without changing the interface connection.

Note that the parameter settings can also be written from the device control circuit 22 through the wired communication port 13, not only from the wireless communication terminal 30, and can be used by the wireless communication terminal 30 to confirm the configuration of the electronic device 20.

The maintenance information is information relating to the maintenance of the electronic device 20 in which the module 10 is used, and is written by the device control circuit 22 through the wired communication, port 13. The device control circuit 22 is configured to constantly update the maintenance information of the electronic device 20 in the nonvolatile storage circuit 131. In the event the electronic device 20 malfunctions, for example, the maintenance information written just before the malfunction can be read by the wireless communication terminal 30 and used to determine the cause of the problem for repair. The wireless communication terminal 30 can easily read the maintenance information even when the electronic device 20 is a stand-alone device (such as a device without an external communication port and unable to receive data from a higher level host terminal, or a device without a human interface for reading and writing internal data). Furthermore, because the maintenance information can be read when the electronic device 20 is installed (regardless of whether the electronic device 20 is operating or not and regardless of the on/off status of the power supply), the maintenance information can also be used for preventive maintenance.

The maintenance information can also be written through the wireless port 11 from the wireless communication terminal 30 instead of the device control circuit 22. This enables the wireless communication terminal 30 to write repair data to the nonvolatile storage circuit 131 when parts are replaced in the electronic device 20 so that this repair data can also be read and used for subsequent repair and maintenance.

Note, further, that this maintenance information includes information about how many times parts with a certain life cycle have been used, the consumption or remaining amount of consumable goods, the operating time of the device, and a parts replacement history, for example. If the electronic device 20 is a printer, for example, the maintenance information may include information about ink ribbon or toner consumption and a maintenance counter reading, for example.

The error log stores information about errors that occurred in the electronic device 20 in which the module 10 is used. Similarly to the maintenance information, the error log can be written through the wired communication port 13 from the device control circuit 22, and can be read through the wireless port 11 from the wireless communication terminal 30. By thus storing an error log in the nonvolatile storage circuit 131 of the module 10, the error log can be easily read from the wireless communication terminal 30 even when the electronic device 20 is a stand-alone device. The error log can also be read even when the electronic device 20 has malfunctioned and is not working, and the cause of the malfunction can thus be easily determined.

Note that the error log also contains error data such as information that is recorded when the electronic device is used improperly or illegally, and errors that occur when the program does not run normally.

The data communication area is used when data other than the foregoing parameter settings, maintenance information, and error log is exchanged between the electronic device 20 (device control circuit 22) and the wireless communication terminal 30. The wireless communication terminal 30 can also write a program which is then read by the electronic device 20 to control operation. As a result, this area can also be used to update the firmware of the electronic device 20.

The status area is used for reading and writing information (the power supply status information, priority port information, and communication status information) stored by the status storage circuit 123. As shown in Fig. 5, data is stored in the status area as flags allocated to specific bits. The priority port flag, for example, corresponds to the priority port information, and is stored as the value S at bit 0. Therefore, supposing the wireless communication control circuit 121 is enabled when the priority port flag is ON, communication (that is, sending and receiving by the wireless communication control circuit 121) is enabled through the wireless port 11 when the priority port flag is ON, and communication (that is, sending and receiving by the wired communication control circuit 122) through the wired port 17 is enabled when the priority port flag is OFF. The relation between the enable/disable states of the communication ports 11 and 13 and the ON/OFF states of the priority port flag may of course be just the reverse.

The power supply status flag corresponds to the power supply status information. The status of the wired power supply port 12 is written as data P1 to bit 1, and the status of the wireless port 11 is written as data P2 to bit 2. When power is supplied via any of the ports 11 and 12, the flag corresponding to that port is set ON.

The communication port status flag corresponds to the communication status information. The status of the wired communication port 13 is written as data F1 to bit 3, and the status of the wireless port 11 is written as data F2 to bit 4. The corresponding flag is set ON in this embodiment when any of the communication ports 11 and 13 is being used for data communication.

Bits 5 through 7 are not used in this embodiment of the invention.

By thus writing data stored by means of the status storage circuit 123 in this status area, the device, 30 or 22, communicating with the electronic device 20 can know the communication status of the communication port 11 or 13 to which the communicating device is connected, and control can be passed to the other communication port of the module 10.

The status area shown in Fig. 5 is described herein as being allocated to a specific memory area in the nonvolatile storage circuit 131 as shown in Fig. 4. Within the scope of the invention the status area could instead be an independent register separate from the memory, and the register could be read using a command separate from the memory read/write commands.

This embodiment of the invention has been described using by way of example a RFID tag module 10 integrated into an electronic device 20 as shown in Fig. 1. As shown in Fig. 6B, however, the present invention can also be used when an electronic device 20 having a built-in RFID tag module 10 (that is, an electronic device with an internal module) is further incorporated in a system device 60. In this arrangement the wired power supply port 12 of the module 10 is connected to the first device power supply circuit 21 of the electronic device 20, and this first device power supply circuit 21 is connected to a second device control circuit 62 for supplying power to the system device 60. The wired communication port 13 of the module 10 is likewise connected to the first device control circuit 22 of the integral electronic device 20, and the first device control circuit 22 is connected to a second device control circuit 62 for controlling the system device 60. This arrangement enables the first device control circuit 22 to communicate with the module 10 and to read and write the second device control circuit 62. Data can thus be handled as though the wireless communication terminal 30 and second device control circuit 62 are communicating.

Furthermore, if the integral electronic device 20 and/or the system device 60 malfunctions, the wireless communication terminal 30 can read and write data using the data storage circuit unit 130 of the module 10 as described above even if the system device 60 is contained in a packaging box 51 (see Fig. 6A).

An module 10 according to the present invention as described above thus has both a wireless port 11 and a wired port 17 (composed of a wired communication port 13 and wired power supply port 12), and can thus exchange data with the electronic device 20 through the wired port 17.

Furthermore, by connecting the wired port 17 to the device power supply circuit 21 and device control circuit 22 of the electronic device 20, the module 10 can be incorporated into and used with the electronic device 20.

Yet further, because communication is enabled and disabled based on the timing when power supply from the ports 11 and 12 starts, data from both communication ports 11 and 13 can be read and written in the same data storage circuit unit 130.

Furthermore, if a communication request is received from the communication port (either communication port 11 or 13) whose corresponding communication control circuit (121 or 122) is disabled, the disabled communication control circuit can detect if the other port (the enabled port) is being used for communication by referencing the status storage circuit 123 though the priority port control circuit 124. If the enabled communication port is in use a busy status is returned to the requesting communication control circuit and the disabled communication port remains disabled. If the enabled communication port is not in use, the priority port control circuit 124 switches the enable/disable status of both ports. In other words, if a communication request is received from a communication device for which communication is turned off, the device is not simply told that communication is disabled. Instead, the status of the communication ports can be switched according to the communication status of the port for which communication is enabled so that communication from a device connected to a communication port that is turned off can be enabled. As a result, the enabled/disabled status of both communication ports 11 and 13 can be switched without interrupting the power supply from the power supply port 11 and 12 for which communication is enabled and then rewriting the priority port information.

Furthermore, if a communication switching command for switching communication from the enabled communication port to the other communication port is received from the enabled communication port, which could be either the wireless port 11 or the wired communication port 13, the priority port control circuit 124 first references the status storage circuit 123 to confirm that power is being supplied from the requested communication port before changing the enabled/disabled state of the communication ports, and thus reliably passes data communication control to the other communication port. This method also enables easily switching communication between the communication ports 11 and 13 without needing to interrupt the power supply from the enabled power supply port 11 or 12.

By storing the parameter settings of the electronic device 20 in the data storage circuit unit 130 of the module 10, the electronic device 20 can be customized according to the customer's needs prior to shipping the electronic device 20, for example, without opening the packaging box 51 or connecting a power supply. The parameter settings of the electronic device 20 can also be changed even while the electronic device 20 is operating without connecting the electronic device 20 to a higher level host terminal.

Furthermore, by storing maintenance information and/or an error log for the electronic device 20 in the data storage circuit unit 130 of the module 10, data can be easily read by the wireless communication terminal 30 even when the electronic device 20 is a stand-alone device (such as a device without an external communication port and unable to receive data from a higher level host terminal, or a device without a human interface for reading and writing internal data) and this information can thus be used effectively when a malfunction occurs, for example. Furthermore, because the maintenance information can be read by the wireless communication terminal when the electronic device 20 is installed (regardless of whether the electronic device 20 is operating or not and regardless of the on/off status of the power supply), the maintenance information can also be used for preventive maintenance. When parts are replaced in the electronic device 20, the wireless communication terminal 30 can also write repair data to the nonvolatile storage circuit 131 and this repair data can then be read and used for subsequent repair and maintenance.

By storing a product ID identifying the electronic device 20 in the data storage circuit unit 130, the type of electronic device 20 can also be determined by the wireless communication terminal 30 reading the product ID. By accessing a website that contains this information and is maintained by the electronic device manufacturer based on this device type information, format data required to interpret signals from the electronic device 20 can also be acquired, and a single wireless communication terminal 30 can thus be used to read data from various types of electronic devices 20.

If the wireless communication control circuit 121 or the wired communication control circuit 122 is disabled and a communication request is received through the communication port 11 or 13 allocated to that communication control circuit, the communication control circuit has been described as confirming the communication status of the other communication control circuit and returning a communication disabled status if communication is in progress (if communication is not in progress, the priority port control circuit 124 switches communication control). Instead, if communication is disabled, the communication control circuit could simply return a communication disabled status without confirming the communication status of the other communication control circuit. This arrangement simplifies control when a communication request is received.

Furthermore, when the priority port control circuit 124 receives a communication switching command from the communication port 11 or 13 enabled for communication, the read/write control circuit 125 references the status storage circuit 123 to confirm that power is being supplied from the other power supply port 11 or 12 before switching communication control. Communication control could, however, be switched (by changing the ON/OFF status of the priority port flag) when a communication switching command is received regardless of whether power is being supplied from the other power supply port. This enables communication to begin as soon as power is supplied from the other power supply port.

In the embodiment explained above, the module 10 is incorporated inside the electronic device 20, but data communication with the electronic device 20 is also possible by connecting the wired port 17 to an external communication port (not shown in the figure) provided on the electronic device 20.

The wireless port 11 or wired power supply port 12 that first supplies power is enabled (set as the priority port) in the foregoing embodiment. However, if power is supplied from both power supply ports, a parameter controlling which communication port 11 or 13 is first given priority can be set and stored in the data storage circuit unit 130. The user can also change this priority parameter setting in the data storage circuit unit 130 using the wireless communication terminal 30.

The control program of the device control circuit 22 of the electronic device 20 and the control circuit unit 120 of the module 10 is preferably implemented as a computer-executable program running on a computer or microcomputer-controlled device. This program can be provided stored on a computer-readable storage medium so that the program can be used on other computers. Examples of such computer-readable storage media include hard disks, flash ROM, memory cards (Compact Flash (R), Smart media, and memory sticks, for example), Compact Disc (R), magneto-optical discs, DVD media, and floppy disks.

## Claims

1. An IC tag module comprising:
a wireless port (11) for sending and receiving data and receiving operating power wirelessly;
a wired port (17) composed of a wired communication port (13) for sending and receiving data over a wired connection and a wired power supply port (12) for receiving operating power through a wired connection;
a power supply circuit unit (110) for combining and supplying to the IC tag module operating power received through the wireless port (11) and operating power received through the wired power supply port (12);
a data storage circuit unit (130) for storing data received through the wireless port (11) and data received through wired communication port (13); and
a control circuit unit (120) for controlling the IC tag module;
wherein the power supply circuit unit (110) is adapted to detect whether operating power is first supplied from the wireless port (11) or the wired port (17); and
the control circuit unit (120) is adapted to enable, if operating power is being supplied from both the wireless port (11) and the wired port (17), communication between the data storage circuit unit (130) and that port through which operating power was supplied first, and to disable communication through the other port.

2. The module of claim 1, wherein the control circuit unit (120) is responsive to a communication request asserted through the disabled port, the wired port (17) or wireless port (11), through which communication is disabled, to return a communication-disabled status message to the device that asserted the communication request.

3. The module of claim 2, wherein the control circuit unit (120) is responsive to a communication request asserted through the disabled port, the wired port (17) or wireless port (11), through which communication is disabled, to detect if the enabled port, through which communication is enabled, is being used for data communication, to return a communication-disabled status message if the enabled port is in use, and to switch an enabled/disabled status of both ports if the enabled port is not in use.

4. The module of any one of claims 1 to 3, wherein the control circuit unit (120) is responsive to a command to switch communication to the disabled one of the ports, the wired port (17) or wireless port (11), from the enabled port to switch an enabled/disabled status of both ports.

5. The module of claim 4, wherein the power supply circuit unit (110) is adapted to regularly detect if operating power is being supplied from the wireless port (11) and/or the wired port (17); and
the control circuit unit (120) is responsive to a command to switch communication to the disabled one of the ports, the wired port (17) or wireless port (11), from the enabled port, to first confirm that operating power is being supplied from said disabled port before switching the enabled/disabled status of both ports.

6. An electronic device comprising:
an IC tag module as described in any one of claims 1 through 5;
a device control circuit (22) for sending and receiving data through the wired communication port (13); and
a device power supply circuit (21) for supplying power to the wired power supply port (12).

7. An information communication system comprising:
an IC tag module as described in any one of claims 1 through 5;
an electronic device (20) for sending and receiving data and supplying operating power through the wired port (17) of the IC tag module; and
a wireless communication terminal (30) for sending and receiving data and supplying operating power through the wireless port (11) of the IC tag module;
wherein the IC tag module is adapted to store parameter settings of the electronic device in the data storage circuit unit (130),
the wireless communication terminal is adapted to read and write the parameter settings in the data storage circuit unit (130) through the wireless port (11), and the electronic device is adapted to read the parameter settings stored in the data storage circuit unit (130) through the wired port (17), to customize the electronic device based on said parameter settings, and/or change the parameter settings.

8. The system of claim 7, wherein the electronic device is adapted to write device information containing electronic device maintenance information and/or error log information through the wired port (17) to the data storage circuit unit (130); and
the wireless communication terminal is adapted to read and write the device information in the data storage circuit unit (130) through the wireless port (11).

9. The system of claim 7 or 8, wherein the data storage circuit unit (130) stores ID information identifying the electronic device.

10. A method of controlling an IC tag module having a wireless port (11) for sending and receiving data and receiving operating power wirelessly; a wired port (17) composed of a wired communication port (13) for sending and receiving data over a wired connection and a wired power supply port (12) for receiving operating power through a wired connection; a power supply circuit unit (110) for combining and supplying to the IC tag module operating power received through the wireless port (11) and operating power received through the wired power supply port (12); a data storage circuit unit (130) for storing data received through the wireless port (11) and data received through wired communication port (13); and a control circuit unit (120) for controlling the IC tag module; comprising the steps of:
a) detecting whether operating power is first supplied from the wireless port (11) or the wired port (17);
b) enabling, if operating power is being supplied from both the wireless port (11) and the wired port (17), communication between the data storage circuit unit (130) and that port through which operating power was supplied first; and
c) disabling communication through the other port.

11. The method of claim 10 wherein operating power is supplied to the IC tag module (10) through the wireless port (11) and/or the wired port (17), the method further comprising a step of:
switching the enabled/disabled status of each port according to presence or absence of a communication request and/or presence or absence of operating power.
